# DEMANDE DE BREVET EUROPEEN

(11) **EP 4 834 560 A1**
(43) Date de publication de la demande: **04.11.2026**
(21) Numéro de dépôt: 25315141.9
(22) Date de dépôt: 28.04.2025
(51) Int. Cl.: B29C 44/04, B65D 1/22, B65D 81/38, B29C 44/44

(54) **PROCÉDÉ DE FABRICATION D'UNE CAISSE ISOTHERME ET RÉEMPLOYABLE**

(71) Demandeur: Knauf Industries Gestion, 68600 Wolfgantzen (FR)
(72) Inventeur: Marchal, Adeline, 68190 Ungersheim (FR); Pierrel, Thibault, 68190 Ungersheim (FR); Grand, Fabrice, 68190 Ungersheim (FR)
(74) Mandataire: Kirkpatrick

(57) **Abrégé**

Procédé de fabrication d'une caisse (20) isotherme et réemployable destinée à contenir des produits thermosensibles, laquelle caisse est fabriquée par injection dans un moule d'un matériau alvéolaire polyoléfines, en particulier du polypropylène expansé (PPE), laquelle caisse comporte des parois ayant une face extérieure (7) et une face intérieure (1), et où une peau est formée à l'aide d'une surfusion de polyoléfine, en particulier du polypropylène, sur les faces intérieures après qu'elles aient été fabriquées pour rendre ces faces intérieures étanche au liquide.

## Description

La présente invention concerne un procédé de fabrication d'une caisse isotherme et réemployable destinée à contenir des produits thermosensibles, laquelle caisse est fabriquée par injection dans un moule d'un matériau alvéolaire polyoléfines, en particulier du polypropylène expansé (PPE), laquelle caisse comporte des parois ayant une face extérieure et une face intérieure.

Un tel procédé est connu de EP 2558 378. Suivant le procédé connu les faces intérieures sont rendues plus épaisses afin de rendre la caisse compatible pour des denrées alimentaire.

Un désavantage du procédé connu est qu'il nécessite l'usage d'une grande quantité de matière pour rendre les faces intérieures plus épaisses. Cela rend non seulement la caisse chère à la vente, mais augmente le poids de cette caisse ce qui affecte sa facilité de la manipuler et augmente le coût de transport de la caisse.

L'invention a pour objet de réaliser un procédé de fabrication d'une caisse isotherme et réemployable destinée à contenir des produits thermosensibles qui nécessite moins de matière pour la fabriquer tout étant étanche au liquide.

A cette fin un procédé de de fabrication d'une caisse isotherme et réemployable destinée à contenir des produits thermosensibles suivant l'invention est caractérisée en ce qu'une peau est formée à l'aide d'une surfusion de polyoléfine, en particulier du polypropylène, sur les faces intérieures après qu'elles ont été fabriquées pour rendre ces faces intérieures étanche au liquide. L'application d'une peau à l'aide d'une surfusion de polyoléfine, en particulier du polypropylène, sur les faces intérieures permet d'appliquer une fine couche étanche au liquide sans devoir utiliser une grande quantité de matière. La couche étant fine elle permet d'obtenir une caisse qui est légère et donc facile à manipuler et économique à transporter.

Une première forme de réalisation préférentielle d'un procédé suivant l'invention est caractérisée en ce qu'un couvercle de la caisse est fabriqué par injection dans un moule d'un matériau alvéolaire polyoléfines, en particulier du polypropylène expansé (PPE), et où une peau est formée à l'aide d'une surfusion de polyoléfine, en particulier du polypropylène, sur la face intérieure du couvercle après qu'elle a été fabriquée pour rendre cette face intérieure étanche au liquide. Ceci permet de donner également au couvercle de la caisse les mêmes propriétés que celle des autres parois de la caisse et ainsi d'obtenir une caisse homogène.

Une deuxième forme de réalisation préférentielle d'un procédé suivant l'invention est caractérisée en ce qu'au moins un évidement est appliqué sur la face intérieure du couvercle. La présence de cet évidement permet de renforcer la structure du couvercle permettant ainsi d'empiler les caisses les unes sur les autres.

Une troisième forme de réalisation préférentielle d'un procédé suivant l'invention est caractérisée en ce que dans deux bords opposés l'un à l'autre du couvercle au moins une zone chanfreinée est chaque fois appliquée. Ceci facilite le positionnement d'un cerclage permettant de retenir le couvercle sur la caisse lors de son transport.

Une quatrième forme de réalisation préférentielle d'un procédé suivant l'invention est caractérisée en ce qu'au moins une zone d'évacuation de liquide est appliquée dans la face extérieure du couvercle de telle façon que la zone d'évacuation s'étend à partir de la face extérieure du couvercle et aboutit dans un bord du couvercle. Ceci permet d'évacuer du liquide, comme par exemple de l'eau, qui serait tombée sur le couvercle.

Une quatrième forme de réalisation préférentielle d'un procédé suivant l'invention est caractérisée en ce qu'un état de surface déperlant est appliqué sur les faces extérieures des parois. Cela permet d'avoir une surface de contact très faible avec du liquide et ainsi de limiter que du liquide s'accroche aux parois extérieures.

Une cinquième forme de réalisation préférentielle d'un procédé suivant l'invention est caractérisée en ce qu'au moins une zone de préhension est appliquée sur une des faces extérieures des parois, laquelle zone de préhension est fabriquée dans la même matière que celle de la caisse. La présence d'au moins une zone de préhension facilite la manipulation de la caisse. Le fait que la zone de préhension soit fabriquée dans la même matière que celle de la caisse permet d'appliquer cette zone de préhension lors du moulage de la caisse.

De préférence la caisse est fabriquée de telle façon à ce que la superficie de la face supérieure soit supérieure à celle de la face inférieure pour permettre d'emboîter les caisses les unes dans les autres.

L'invention sera maintenant décrite plus en détails à l'aide des dessins qui illustrent une forme de réalisation de la caisse obtenue par application du procédé suivant l'invention. Dans les dessins,
La figure 1 montre une vue de la caisse obtenue par application du procédé suivant l'invention ;
La figure 2 montre la face supérieure du couvercle de la caisse ;
La figure 3 montre la face inférieure du couvercle de la caisse ;
La figure 4 montre la caisse avec le couvercle retenu sur la caisse à l'aide de sangles ;
La figure 5 montre le fond de la caisse ;
Les figures 6 et 7 montrent l'emboîtement de deux caisses ; et
La figure 8 montre une vue du dessus d'une caisse suivant l'invention.
La figure 9 montre une vue microscopique d'une coupe du fond de la caisse.
La figure 10 montre un exemple d'état de surface déperlant.

Dans les dessins un même signe de référence a été attribué à un même élément ou à un élément analogue.

La caisse illustrée dans les dessins est une caisse marée, c'est-à-dire pour stocker des produits de la mer, comme du poisson ou des fruits de mer. Il sera toutefois clair que l'invention n'est pas limitée à des caisses de marée. Les caisses produites par application du procédé suivant la présente invention sont des caisses isotherme et réemployable destinée à contenir des produits thermosensibles comme par exemple du poisson, de la viande, des denrées alimentaires, des organes destinés à la transplantation ou des produits pharmaceutiques comme par exemple des vaccins.

En particulier dans le domaine du conditionnement des produits de la mer, les solutions d'emballage jouent un rôle crucial pour garantir la fraîcheur et l'intégrité des produits tout au long de la chaîne d'approvisionnement. Traditionnellement et historiquement, les caisses en polystyrène expansé (PSE) sont largement utilisées en raison de leurs propriétés isolantes et de leur légèreté. Cependant, ces caisses sont non réemployables et peuvent poser des problèmes environnementaux en raison de leur usage unique.

Pour donner entre autres suite à la loi française d'anti-gaspillage pour une économie circulaire (AGEC), adoptée en février 2020 qui prévoyait d'interdire la mise sur le marché de certains emballages en polystyrène expansé (PSE), des solutions alternatives ont vu le jour comme les caisses plastiques. Cependant, cette interdiction a été partiellement remise en question à cause des défis industriels et économiques liés à l'absence d'alternatives performantes pour certains usages du PSE. Toutefois, le nouveau règlement PPWR impose pour les emballages de transport un taux de 40% d'emballages réemployables d'ici 2040.

La fabrication d'une caisse isotherme et réemployable destinée à contenir des produits thermosensibles est réalisée par injection dans un moule d'un matériau alvéolaire polyoléfines, en particulier du polypropylène expansé (PPE) et comporte des parois ayant une face extérieure et une face intérieure. Pour transporter des produits thermosensibles il est toutefois important que la caisse soit non seulement bien isolée afin de garder à température les produits stockés dans la caisse, mais également que les parois soient étanche au liquide. En effet, non seulement les produits sont plus particulièrement transportés dans de la glace, mais de produits comme du poisson ou de la viande contiennent du liquide ce qui peut causer des exsudats, ce qui implique qu'il faut limiter au maximum, et de préférence empêcher, que ce liquide, le cas échéant mélangé à l'eau provenant de la fonte de la glace, s'infiltre dans les parois de la caisse. En effet une telle infiltration rendrait la caisse non réutilisable. Pour limiter au maximum, et de préférence empêcher une telle infiltration, le procédé suivant l'invention est caractérisé en ce qu'une peau est formée à l'aide d'une surfusion de polyoléfine, en particulier du polypropylène, sur les faces intérieures après qu'elles ont été fabriquées pour rendre ces faces intérieures étanches au liquide.

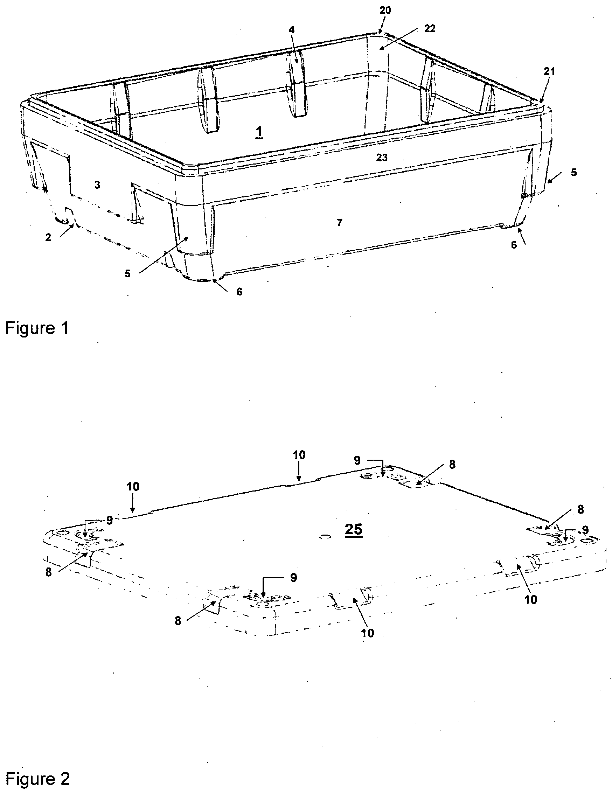

La caisse 20 telle qu'illustré à la figure 1 est fabriquée par injection dans un moule d'un matériau alvéolaire polyoléfines, en particulier du polypropylène expansé (PPE). L'utilisation d'une matériau alvéolaire polyoléfines, qui est un matériau recyclable, lui confère des propriétés de résilience ce qui va considérablement diminuer les risques de casse des caisses. De plus, cette matière alvéolaire permet d'allier performance mécanique et légèreté. La densité du matériau utilisé lui confère légèreté et robustesse accrue tout en limitant le poids. C'est en partant de l'usage d'un matériau alvéolaire polyoléfines et étant confronté au problème de rendre la caisse étanche au liquide que les inventeurs ont eu l'idée d'utiliser un procédé de surfusion de polyoléfine et de l'appliquer aux faces intérieures après qu'elles ont eu été fabriquées pour rendre ces faces intérieures étanches au liquide.

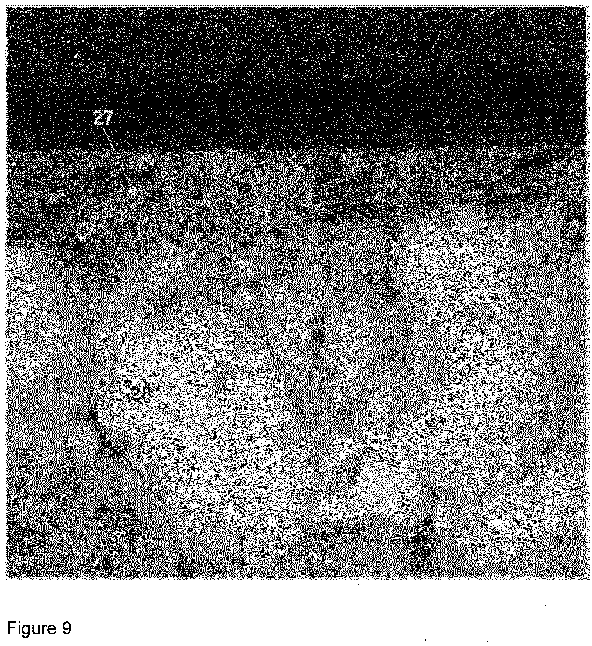

La surfusion est un procédé avancé qui permet la création d'une fine peau de polypropylène, par exemple située dans une plage d'une épaisseur de 0,5 à 3 mm, en particulier de 1 à 3 mm, sur des pièces en polypropylène expansé à l'aide de billes de polypropylène expansé. Ce procédé repose sur le chauffage sélectif d'une partie du moule d'injection, par exemple à l'aide d'huile chaude. La surface du poinçon du moule en contact avec le polypropylène est de préférence polie, en particulier si la caisse est destinée au transport de denrées alimentaires. Cette surface du poinçon du moule ne dispose pas de buse permettant de faire passer la vapeur, comme dans le reste du moule. Le poinçon du moule est équipé d'une chambre de chauffe surfusion séparée de la chambre vapeur du moule dans sa globalité. Cette chambre de chauffe surfusion est par exemple chauffée par un flux caloporteur possédant une température de 170 à 220 °C, préférentiellement de 180 à 210°C, plus préférentiellement de 185 à 200°C pouvant être par exemple de l'huile, de l'eau pressurisée ou de la vapeur d'eau sursaturée. Le poinçon du moule est alors chauffé à une température située dans une plage de 140 à 200°C, préférentiellement de 145 à 175°C, plus préférentiellement de 150 à 170°C, ce qui provoque la fusion des billes de polypropylène expansé en contact avec cette partie chauffée du moule. Le temps de chauffe est dépendant de l'épaisseur de la pièce à mouler et de l'épaisseur de la « peau » désirée, le temps de chauffe se situe entre 35 et 80 s, préférentiellement entre 40 et 70s, plus préférentiellement entre 40 et 60s. La fusion des billes en surface provoque la perte du caractère individuel des billes qui forment en surface une peau 27 contrairement aux billes de polypropylène expansé 28. Le résultat obtenu par cette surfusion est illustré à la figure 9 qui montre une vue microscopique d'une coupe du fond de la caisse. On y voit une partie plus foncée 27 qui montre la peau formée à la face intérieure et une partie plus claire 28. Dans la partie plus foncée 27 on ne reconnaît plus la forme des billes, alors que dans la partie plus claire 28 la forme des billes reste visible.

En dépassant le point de fusion approprié, en particulier de 140 à 165°C, préférablement de 142 à 162°C, les billes de polypropylène expansé se lient entre elles et forment une fine couche agglomérée de polypropylène. Il est même possible de faire varier l'épaisseur de la couche en fonction de l'épaisseur souhaité pour le type de caisse. Cette variation de l'épaisseur de peau est obtenue en faisant varier le temps de chauffe entre 35 et 80 s, préférentiellement entre 40 et 70s, plus préférentiellement entre 40 et 60s, la température de chauffe surfusion de 140 à 200°C, préférentiellement de 145 à 175°C, plus préférentiellement de 150 à 170°C, de la densité du PPE sélectionné entre 40 et 90g/L, de préférence entre 50 et 80 g/L, plus particulièrement entre 50 et 70g/L, de sa compressibilité et des paramètres de remplissage du moule comme le pression de la boite matière entre 1 et 4 bar, préférentiellement entre 1.5 et 3.5 bar, plus préférentiellement entre 1.7 et 3 bar. Cette peau fine, étant en contact direct avec ladite surface du moule, acquiert ainsi une texture lisse et une haute étanchéité.

Les billes de polypropylène expansé situées à l'arrière de cette peau restent intactes, ce qui permet de conserver l'intégrité structurelle de la caisse tout en bénéficiant des propriétés d'un film de polyoléfines lisse et étanche. Ce procédé assure que la caisse ainsi produite demeure un produit mono-matériau, combinant les avantages fonctionnels d'un matériau alvéolaire polyoléfines avec ceux d'un revêtement de surface de haute qualité.

La peau fine formée sur la face intérieure de la caisse permet d'obtenir une surface lisse, laquelle assure une protection optimale des produits contenus dans la caisse. De plus, la surface lisse facilite le nettoyage de la caisse. Cette surface lisse évite les zones de rétention **d'eau et contribue** ainsi au réemploi de la caisse. Cela permet également de faciliter le nettoyage de la caisse et limite la stagnation d'eau. Cette surface permet également d'assurer une étanchéité interne de la caisse, l'eau ne peut pas s'infiltrer au travers des parois en PPE et ainsi faciliter sa désinfection.

L'usage d'un matériau alvéolaire polyoléfines, en particulier du polypropylène expansé (PPE), permet d'obtenir une caisse qui est réemployable, contrairement aux caisses en polystyrène expansé. L'usage d'un matériau alvéolaire polyoléfines offre en plus une isolation thermique renforcée par rapport aux caisses réemployables injectés actuellement sur le marché. La conductivité thermique du PPE est située entre 30 et 45 mW/(m.K) selon la densité plus particulièrement entre 38 et 45 mW/(m.K). Ainsi par exemple dans le cas d'une caisse suivant l'invention et ayant une densité de 60 g/L on obtient une conductivité située autour de 40-41 W/(m.K). Cette propriété permet maintenir la chaîne du froid, et de préserver la qualité du produit stocké dans la caisse tout le long de la chaine logistique. Cela permet également de réduire la consommation énergétique nécessaire au maintien de températures basses pendant le transport et diminue également le « gaspillage alimentaire » du fait que les denrées sont conservées à bonne température tout le long de la chaine logistique.

Par rapport aux modèles réemployables non alvéolaires, la caisse suivant l'invention est plus légère. En comparaison avec une caisse en polypropylène, qui possède une densité théorique de 900 kg/m³, et une caisse PPE suivant l'invention dont la densité est de 60 kg/m³ en PPE (80 kg/m³ réel en prenant en compte la surfusion), on obtient une diminution d'environ 90%.

Cette diminution du poids facilite la manipulation et réduit les troubles musculosquelettiques et les coûts de transport, notamment liés à la consommation de carburant. La forme empilable et ergonomique améliore le stockage chez les clients et la reverse logistique, c'est-à-dire la logistique après utilisation vers l'industriel du lavage et également de chez l'industriel du lavage chez le client. L'utilisation d'une matière alvéolaire lui confère également des propriétés de résilience ce qui va considérablement diminuer les risques de casse des caisses. De plus, une matière alvéolaire permet d'allier performance mécanique et légèreté. La densité située entre 40 et 90g/L, de préférence entre 50 et 80 g/L, plus particulièrement entre 50 et 70g/L du matériau utilisé lui confère légèreté et robustesse accrue tout en limitant le poids.

Afin de garantir que les exsudats ne souillent pas les faces extérieures de la caisse, qui sont quant à elles pas sur-fusées, un état de surface déperlant est appliqué sur ces faces extérieures de la caisse, permettant ainsi aux gouttes d'eau de ne pas pénétrer à l'intérieur de la matrice alvéolaire polypropylène expansé de la caisse. L'état de surface déperlant est obtenu par texturation contrôlée de la surface de la cavité du moule (partie femelle). Cette texturation possède une rugosité comprise entre 0,2 et 0,5 mm, appliquée à la surface externe de la pièce, générant localement des points chauds au niveau des reliefs du moule. Ces zones favorisent la formation, lors du moulage, d'une peau superficielle de polypropylène fondu d'une épaisseur comprise entre 50 et 300 µm. La porosité externe est ainsi réduite, limitant l'infiltration de liquide dans la pièce, sans altérer les propriétés et la structure cellulaire interne des billes de PPE. De plus la texture tridimensionnelle augmente l'angle de contact avec un liquide comparé à la surface du PPE standard. L'angle de contact induit est supérieur à 90°, conférant à la surface un caractère hydrophobe. L'état de surface déperlant ainsi obtenu réduit l'adhérence des liquides, facilite le nettoyage, limite l'encrassement et améliore la durabilité de la caisse sans ajout de revêtement ou traitement chimique complémentaire.

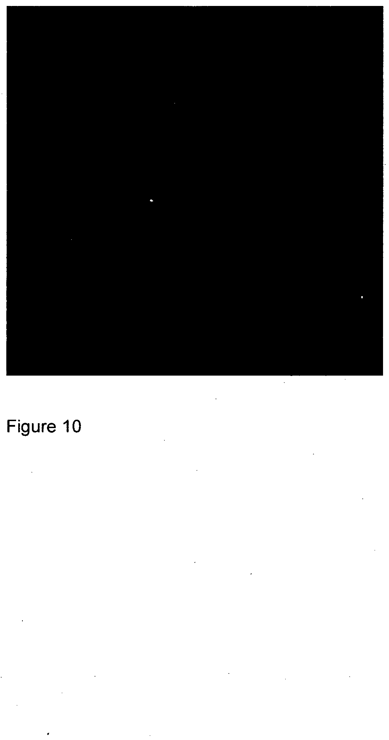

Un exemple d'état de surface déperlant des faces extérieures est illustré en figure 10. Cet état de surface déperlant est par exemple formé par un ensemble de sections où chaque section comporte une surface pourvue de stries. Les sections sont de préférence disposées de telle façon que les stries de deux sections adjacentes forment un angle de 90° entre eux.

La caisse 20, illustrée à la figure 1 est une caisse rectangulaire, ce qui est en particulier pour le transport un format tout à fait approprié. Il sera toutefois clair que l'invention n'est pas limitée à des caisses de format rectangulaires et que d'autres formats, tel que des caisses rondes ou cylindriques ou ayant plus que quatre angles peuvent être fabriquées par application du procédé suivant l'invention. Il sera également clair que la présente invention n'est pas limitée à des caisses d'une dimension particulaire.

La caisse illustrée à la figure 1 comporte des parois ayant une face extérieure 7 et une face intérieure 1. Au moins un trou 2 d'évacuation de liquide est appliqué dans une paroi de la caisse. Ce(s) trou(s) traverse(nt) la paroi et permet(tent) l'évacuation d'exsudant et/ou d'eau et contribue(nt) ainsi au fait que ces exsudant et/ou cette eau ne s'accumule pas dans la caisse. Cette évacuation contribuera également à limiter que les exsudant viennent contaminer ou polluer les faces intérieures de la caisse. Le ou les trou(s) sont appliqué(s) à hauteur du fond de la caisse. De préférence chaque trou débouche dans une cavité appliquée dans la face extérieure.

La caisse est de préférence pourvue d'au moins une zone de préhension 3 appliquée sur une des faces extérieures des parois, laquelle zone de préhension est fabriquée dans la même matière que celle de la caisse. Le fait que la zone de préhension est fabriquée dans la même matière que celle de la caisse permet de la fabriquer lors du moulage de la caisse. La zone de préhension est appliquée sur la face extérieure de la caisse et est de préférence formée par une poignée appliquée sur au moins une face transversale de la caisse. La zone de préhension facilite la manutention de la caisse.

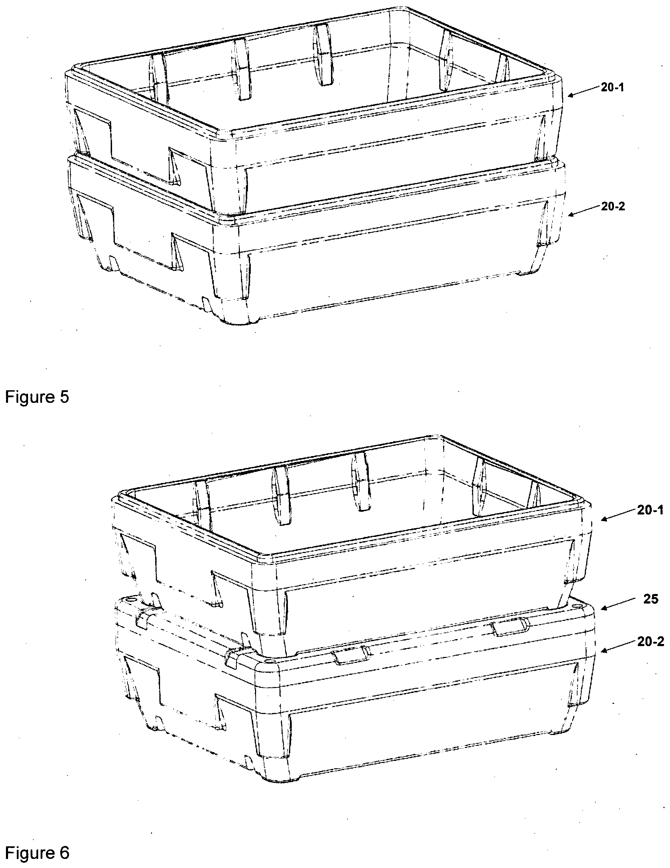

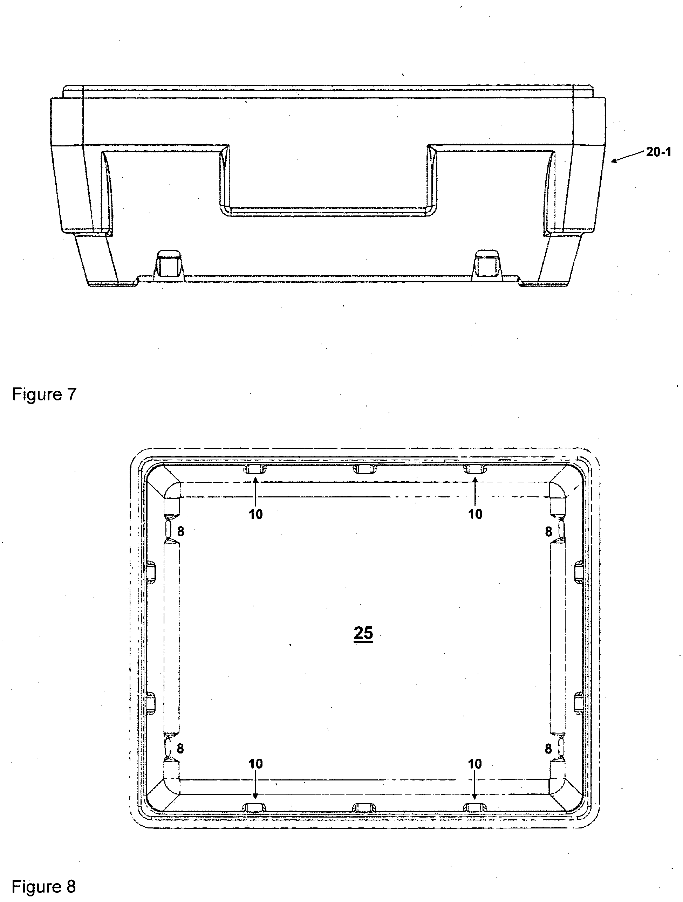

De préférence la caisse est fabriquée de telle façon à ce que la superficie de la face supérieure soit supérieure à celle de la face inférieure pour permettre d'emboîter les caisses les unes dans les autres. Ceci permet d'emboîter les caisses 20-1 et 20-2 les unes dans les autres pour faciliter ainsi le transport et/ou le stockage des caisses vides, comme illustré aux figures 6 et 7. Cela permet également de réduire les couts de transport lors des opérations de reverse logistique des caisses vides.

Dans la forme de réalisation où les caisses sont emboîtables les unes dans les autres, la zone de préhension 3 s'étend en dessous et dans le prolongement d'une ceinture périphérique 23 appliquée autour de la face supérieure de la caisse. La hauteur de la zone de préhension est telle qu'elle ne vient pas perturber l'emboîtement.

De préférence des organes de renforts 4 sont appliqués sur les faces intérieures des parois, lesquels organes de renforts 4 sont appliqués de façon à s'étendre dans le sens de la profondeur de la caisse. De préférence l'organe de renfort possède une géométrie en forme de canal dont le fond est posé sur la face interne et donc les berges s'étendent perpendiculairement au fond dans le volume intérieur de la caisse. Lorsque la superficie de la face supérieure de la caisse est supérieure à celle de la face inférieure, les organes de renfort servent également à compenser la différence de distance entre les caisses lorsqu'elles sont emboîtées. Les organes de renfort sont de préférence appliqués sur chaque face intérieure et leur nombre par face dépend bien entendu de la dimension de la caisse. Les organes de renfort sont fabriqués dans la même matière que celle de la caisse et sont appliqués lors du moulage de la caisse. Ceci facilite leur application et permet une production à coût réduit.

De préférence des pieds 6 sont appliqués sur la face extérieure du fond de la caisse, lesquels pieds sont fabriqués dans la même matière que celle de la caisse. Les pieds sont appliqués lors du moulage de la caisse. Ceci facilite leur application et permet une production à coût réduit. Les pieds servent à créer une distance entre le fond de la caisse et la surface sur laquelle la caisse est posée. Ils permettent également d'empiler les caisses comme il sera décrit ultérieurement. Les pieds permettent également de réduire la zone de contact avec le plan de travail. Ils sont de préférence disposés dans les quatre coins de la caisse. Ceci permet également de maintenir la caisse sur le couvercle d'une autre caisse lorsque plusieurs de celle-ci sont gerbées. Les pieds permettent aussi une meilleure ventilation du dessous de la caisse, ceci est utile pour éviter la stagnation de l'eau sous le dessous de la caisse lors de sa manipulation.

Afin de rigidifier les caisses, des taquets 5 de renfort et/ou d'emboitement peuvent être appliqués aux coins de la caisse. Ces taquets sont également fabriques dans la même matière que celle de la caisse pour la même raison que celle reprise au préalable. De préférence ces taquets sont de forme arrondie pour éviter que les caisses aient des angles aigus. Une caisse équipée de taquets 5 aura également des évidements 22 au coin à l'intérieur de la caisse et dont la géométrie sera complémentaire à celle des taquets afin que les taquets puissent se loger dans ces évidements lorsqu'elles sont empilées. Les taquets empêchent les caisses d'être difficiles à désempiler, même lorsqu'elles sont gerbées les unes sur les autres à vide, facilitant ainsi le processus de dé-empilage et assurant une utilisation plus pratique et efficiente.

Lorsque la caisse comporte un couvercle 25, un bord périphérique 21 sera de préférence appliqué autour du bord supérieur de la caisse afin de permettre au couvercle de prendre prise sur ce bord.

La figure 2, respectivement 3, montre la face supérieure, respectivement intérieure, du couvercle de la caisse. Le couvercle 25 est également fabriqué par injection dans un moule d'un matériau alvéolaire polyoléfines, en particulier du polypropylène expansé (PPE). Une peau est formée sur la face intérieure de la caisse également à l'aide d'une surfusion de polyoléfine, en particulier du polypropylène, après que le couvercle a été fabriquée. Cette peau rend cette face intérieure étanche au liquide.

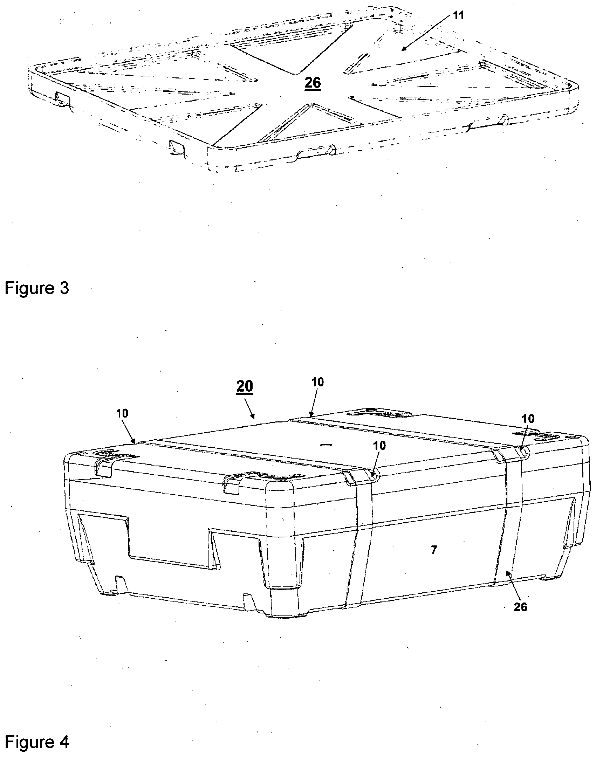

Au moins un évidement 11 est appliqué sur une face intérieure du couvercle 25, comme illustré à la figure 3. Une surfusion est formée sur cet évidement. Les évidements ont de préférence une forme triangulaire et sont séparés par des traverses 26. Les traverses et les évidements contribuent à rigidifier la structure du couvercle et permettent d'empiler les caisses les unes sur les autres.

Au moins une zone chanfreinée 10 est appliquée dans chacun de deux bords opposés l'un à l'autre du couvercle 25. La zone chanfreinée s'étend à partir de la face extérieure vers le bord du couvercle. Ceci facilite le positionnement d'un cerclage permettant de retenir le couvercle sur la caisse lors de son transport. Comme illustré à la figure 4 et afin de relier et de fixer le couvercle 25 sur la caisse on fait usage d'une sangle 26 comme moyen de cerclage. Cette sangle est posée sur la face extérieure du couvercle et passe par les zones chanfreinées pour venir entourer la caisse et son couvercle. La présence des zones chanfreinées permet non seulement de guider la sangle, mais limité un déplacement de la sangle qui est retenue par les parois montantes des zones chanfreinées.

Au moins une zone d'évacuation 8 de liquide est appliquée dans la face extérieure du couvercle de telle façon que la zone d'évacuation s'étend à partir de la face extérieure du couvercle et aboutit dans un bord du couvercle. Ceci permet d'évacuer du liquide, comme par exemple de l'eau, qui serait tombée sur le couvercle. Cette zone d'évacuation est par exemple formée par un évidement d'une profondeur de 1 à 2 mm et formé dans la matière du couvercle.

De préférence, et en particulier lorsque la caisse comporte des pieds 6, au moins une contreforme 9 est également appliquée dans la face extérieure du couvercle. Cette contreforme a la géométrie de la semelle des pieds.

## Revendications

1. Procédé de fabrication d'une caisse (20) isotherme et réemployable destinée à contenir des produits thermosensibles, laquelle caisse est fabriquée par injection dans un moule d'un matériau alvéolaire polyoléfines, en particulier du polypropylène expansé (PPE), laquelle caisse comporte des parois ayant une face extérieure (7) et une face intérieure (1), **caractérisé en ce qu'** une peau est formée à l'aide d'une surfusion de polyoléfine, en particulier du polypropylène, sur les faces intérieures après qu'elles aient été fabriquées pour rendre ces faces intérieures étanche au liquide.

2. Procédé de fabrication suivant la revendication 1, **caractérisé en ce qu'**un couvercle (25) de la caisse est fabriqué par injection dans un moule d'un matériau alvéolaire polyoléfines, en particulier du polypropylène expansé (PPE), et où une peau est formée à l'aide d'une surfusion de polyoléfine, en particulier du polypropylène, sur la face intérieure du couvercle après qu'elle a été fabriquée pour rendre cette face intérieure étanche au liquide.

3. Procédé suivant la revendication 2, **caractérisé en ce qu'**au moins un évidement (11) est appliqué sur la face intérieure du couvercle.

4. Procédé suivant la revendication 3, **caractérisé en ce qu'**une surfusion est formée à chaque évidement (11).

5. Procédé suivant l'une des revendications 2 à 4, **caractérisé en ce que** dans deux bords opposés l'un à l'autre du couvercle au moins une zone chanfreinée (10) est chaque fois appliquée.

6. Procédé suivant l'une des revendications 2 à 5, **caractérisé en ce qu'**au moins une zone d'évacuation (8) de liquide est appliquée dans la face extérieure du couvercle de telle façon que la zone d'évacuation s'étend à partir de la face extérieure du couvercle et aboutit dans un bord du couvercle.

7. Procédé de fabrication suivant l'une des revendications 1 à 6, **caractérisé en ce qu'**un état de surface déperlant est appliqué sur les faces extérieures des parois.

8. Procédé de fabrication suivant l'une des revendications 1 à 7, **caractérisé en ce qu'**au moins un trou d'évacuation (2) de liquide est appliqué dans une paroi de la caisse.

9. Procédé de fabrication suivant l'une des revendications 1 à 8, **caractérisé en ce qu'**au moins une zone de préhension (3) est appliquée sur une des faces extérieures des parois, laquelle zone de préhension est fabriquée dans la même matière que celle de la caisse.

10. Procédé de fabrication suivant l'une des revendications 1 à 9, **caractérisé en ce que** des organes de renforts (4) sont appliqués sur les faces intérieures des parois, lesquels organes de renforts sont appliqués de façon à s'étendre dans le sens de la profondeur de la caisse.

11. Procédé de fabrication suivant l'une des revendications 1 à 10, **caractérisé en ce que** la caisse est fabriquée de telle façon à ce que la superficie de la face supérieure soit supérieure à celle de la face inférieure pour permettre d'emboîter les caisses les unes dans les autres.

12. Procédé suivant l'une des revendications 1 à 11, **caractérisé en ce que** des taquets de renfort (5) et/ou d'emboitement sont appliqués aux coins de la caisse.

13. Procédé de fabrication suivant l'une des revendications 1 à 12, **caractérisé en ce que** des pieds (6) sont appliqués sur la face extérieure du fond de la caisse, lesquels pieds sont fabriqués dans la même matière que celle de la caisse.

14. Procédé suivant la revendication 2 et 13, **caractérisé en ce que** des contreformes (9) ayant la géométrie de la semelle des pieds sont appliqués dans le couvercle.

15. Caisse (20) isotherme et réemployable destinée à contenir des produits thermosensibles et fabriquée d'un matériau alvéolaire polyoléfines, en particulier du polypropylène expansé (PPE), laquelle caisse comporte des parois ayant une face extérieure et une face intérieure, **caractérisée en ce que** les billes du matériau alvéolaire polyoléfines expansé qui forment la face intérieure sont liées entre elles et forment une fine couche agglomérée du matériau alvéolaire polyoléfines.

## Revendications modifiées

### Revendications modifiées conformément à la règle 137(2) CBE.

1. Procédé de fabrication d'une caisse (20) isotherme et réemployable destinée à contenir des produits thermosensibles, suivant lequel la caisse est fabriquée en injectant dans un moule un matériau formé de billes alvéolaire de polyoléfines, en particulier du polypropylène expansé (PPE) , laquelle caisse comporte des parois ayant une face extérieure (7) et une face intérieure (1), et en ce que l'on forme sur les faces intérieures de la caisse une peau de polypropylène en soumettant les billes de polypropylène expansé qui forment ces faces intérieures à une température qui dépasse leur point de fusion pour rendre ces faces intérieures étanche au liquide, **caractérisé en ce qu'**on applique un état de surface déperlant sur les faces extérieures des parois.

2. Procédé de fabrication suivant la revendication 1, **caractérisé en ce qu'**on fabrique un couvercle (25) de la caisse en injectant dans un moule un matériau formé de billes alvéolaire de polyoléfines, en particulier du polypropylène expansé (PPE), et **en ce que** l'on forme sur une face intérieure du couvercle une peau de polypropylène en soumettant les billes de polypropylène expansé qui forment cette face intérieure du couvercle à une température qui dépasse leur point de fusion pour rendre cette face intérieure du couvercle étanche au liquide, **caractérisé en ce qu'**on applique un état de surface déperlant sur la face extérieure du couvercle.

3. Procédé suivant la revendication 1 ou 2, **caractérisé en ce que** l'état de surface déperlant est obtenu par texturation contrôlée de la surface de la cavité du moule.

4. Procédé suivant la revendication 3, **caractérisé en ce que** la texturation est telle à avoir un angle de contact avec l'eau supérieur à 90°.

5. Procédé suivant la revendication 3 ou 4, **caractérisé en ce que** la texturation est contrôlée de telle façon à ce qu'elle possède une rugosité comprise entre 0,2 et 0,5 mm, appliquée à la surface externe.

6. Procédé suivant l'une des revendications 1 à 5, **caractérisé en ce que** la surface déperlant est appliquée de façon à obtenir sur ladite surface une peau superficielle de polypropylène fondu d'une épaisseur comprise entre 50 et 300 µm.

7. Procédé suivant l'une des revendications 2 à 6, **caractérisé en ce que** dans deux bords opposés l'un à l'autre du couvercle au moins une zone chanfreinée (10) est chaque fois appliquée.

8. Procédé suivant l'une des revendications 2 à 7, **caractérisé en ce qu'**au moins une zone d'évacuation (8) de liquide est appliquée dans la face extérieure du couvercle de telle façon que la zone d'évacuation s'étend à partir de la face extérieure du couvercle et aboutit dans un bord du couvercle.

9. Procédé de fabrication suivant l'une des revendications 1 à 8, **caractérisé en ce qu'**au moins une zone de préhension (3) est appliquée sur une des faces extérieures des parois, laquelle zone de préhension est fabriquée dans la même matière que celle de la caisse.

10. Procédé de fabrication suivant l'une des revendications 1 à 9, **caractérisé en ce que** des organes de renforts (4) sont appliqués sur les faces intérieures des parois, lesquels organes de renforts sont appliqués de façon à s'étendre dans le sens de la profondeur de la caisse.

11. Procédé de fabrication suivant l'une des revendications 1 à 10, **caractérisé en ce que** la caisse est fabriquée de telle façon à ce que la superficie de la face supérieure soit supérieure à celle de la face inférieure pour permettre d'emboîter les caisses les unes dans les autres.

12. Procédé suivant l'une des revendications 1 à 11, **caractérisé en ce que** des taquets de renfort (5) et/ou d'emboitement sont appliqués aux coins de la caisse.

13. Procédé de fabrication suivant l'une des revendications 1 à 12, **caractérisé en ce que** des pieds (6) sont appliqués sur la face extérieure du fond de la caisse, lesquels pieds sont fabriqués dans la même matière que celle de la caisse.

14. Procédé suivant la revendication 2 et 13, **caractérisé en ce que** des contreformes (9) ayant la géométrie de la semelle des pieds sont appliqués dans le couvercle.

15. Caisse (20) isotherme et réemployable destinée à contenir des produits thermosensibles et fabriquée d'un matériau alvéolaire polyoléfines, en particulier du polypropylène expansé (PPE), laquelle caisse comporte des parois ayant une face extérieure et une face intérieure, où les billes du matériau alvéolaire polyoléfines expansé qui forment la face intérieure sont liées entre elles et forment une fine couche agglomérée du matériau alvéolaire polyoléfines,, **caractérisée en ce qu'**un état de surface déperlant est formé sur les faces extérieures des parois et/ou du couvercle.
